(19) Europäisches Patentamt
European Patent Office
Office européen des brevets

(11) **EP 4 675 103 A1**

(12) **EUROPEAN PATENT APPLICATION**

(43) Date of publication:
**07.01.2026  Bulletin 2026/02**

(21) Application number: 25216504.8

(22) Date of filing: **26.08.2021**

(51) International Patent Classification (IPC):
**F04B 41/06** (2006.01)     **F04B 49/02** (2006.01)
**F04B 49/06** (2006.01)     **F04B 49/08** (2006.01)
**F04B 49/10** (2006.01)     **F04C 23/00** (2006.01)
**F04D 27/02** (2006.01)

(52) Cooperative Patent Classification (CPC):
**F04B 41/06; F04B 49/02; F04B 49/065;**
**F04B 49/08; F04B 49/106; F04D 27/0292;**
F04B 2205/06; F04B 2205/09; F05D 2260/821;
F05D 2270/301; F05D 2270/3061

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Validation States:
**MA TN**

(62) Document number(s) of the earlier application(s) in
accordance with Art. 76 EPC:
**21772689.2 / 4 392 674**

(71) Applicant: **Atlas Copco Airpower, naamloze
vennootschap
2610 Wilrijk (BE)**

(72) Inventor: **VAN ROY, Wim
2610 Wilrijk (BE)**

(74) Representative: **Atlas Copco Airpower IP
department
Airtec Division
P.O. Box 101
Boomsesteenweg 957
2610 Wilrijk (BE)**

Remarks:
This application was filed on 18-11-2025 as a
divisional application to the application mentioned
under INID code 62.

(54) **MODEL PREDICTIVE CONTROL OF A COMPRESSED AIR SYSTEM**

(57)    The present invention is directed to a computer implemented method for controlling a finite set of components which are fluidly connected to a common compressed air distribution system, the method comprising iteratively repeating the steps of:
- receiving prediction data for said compressed air distribution system;
- receiving characterising data for each component of said set of components;
- determining one or more sets of continuously differentiable functions, wherein each of said sets of functions represents a unique sequence of operation of the components in said set of components;
- selecting an optimal set of functions from said one or more sets of continuously differentiable functions; wherein the unique sequence of operation represented by said optimal set meets said prediction data;
- deriving configuration data for said set of components from said optimal set of functions;
- configuring each component of said set of components based on said configuration data.

Figure 4b

EP 4 675 103 A1

## Description

### Field of the invention

The present invention relates to the field of compressors and more in particular to the model predictive control of a compressor room.

### Background

It is known that compressors are used to compress air or gases in one or more compression stages. The compressed air or gas it then provided to one or more consumers. The distribution thereof is provided through a compressed air or gas system.

Since the number of consumers may be vast and spatially distributed over a significant area, for example in an industrial plant or in a hospital, usually a central hub is installed for providing therefrom the compressed air or gases.

A central hub normally comprises one or more compressor rooms wherein in each room one or more compressors are installed. Further, auxiliary devices such as valves, filters, dryers, vessels, sensors, controlling components, and/or other devices for managing and/or controlling the compressor rooms are likewise installed. Next, from the one or more compressor rooms onward pipes or ducts depart for supplying the consumers. As a last part in the chain, the compressed air or gas is utilized by the consumers for a variety of applications.

Furthermore, between the compressors and the consumers another set of devices may be present as well such as safety valves, distribution valves, control sensors, or other devices for controlling and safeguarding the distribution of the compressed air or gases.

The described set-up will further be nominated as a compressed air or gas system. Hence, a compressed air or gas system may comprise one compressor supplying one consumer but will generally be regarded as more extensive thus comprising a multitude of components, thereby constituting a complex system of several elements interacting with each other.

To make use of the compressed air or gas system, the different parts thereof need to be controlled. It is already known to separately control compressors by means of independent local controllers, whereby the different controllers are set at a predefined pressure value thereby switching the compressors sequentially on or off, depending on the consumption of compressed air.

It is further known to apply a method for controlling a compressed air or gas system by a number of communicating controllers for controlling components that are part of the compressed air or gas system, whereby the components are controlled such that none of the controllers determines the operational condition of any component that is controlled by other controllers. In WO2008/009073 such a method is disclosed.

In WO2008/009072 another method is disclosed for controlling a compressed air unit which consists of several compressed air or gas networks having at least one commonly controllable component, whereby, on the basis of measurement data of at least one of the compressed air or gas networks, at least the common component is controlled by at least one controller.

However, a disadvantage of these controlling methods is that they solely operate based on the current state of the compressed air or gas system, meaning that they are incapable of considering a prediction of any kind. This leads to suboptimal control and higher energy cost.

### Summary of the invention

The present invention aims to remedy the above-mentioned and other disadvantages. To this end, a first aspect of the invention concerns a computer implemented method for controlling a finite set of components which are fluidly connected to a common compressed air distribution system, the method comprising iteratively repeating the steps of:

- receiving prediction data representing predicted future pressure and/or airflow demand for the compressed air distribution system, the prediction data covering a prediction period;
- receiving characterising data for each component of the set of components, said characterising data comprising at least air flow data, air pressure data, energy consumption data;
- determining one or more sets of continuously differentiable functions, wherein each of the sets of functions describes the pressure and/or airflow of the compressed air distribution system, wherein each of the sets of functions represents a unique sequence of operation of the components in the set of components that meets the predicted future pressure and/or airflow data for at least an initial portion of the prediction period;

- selecting an optimal set of functions from the one or more sets of continuously differentiable functions; wherein the unique sequence of operation represented by the optimal set meets the predicted future pressure and/or airflow data for at least a second portion of the prediction period;

- deriving configuration data from the optimal set of functions for the set of components;
- configuring each component of the set of components based on the configuration data.

In a first step of the method, prediction data is received. In the context of this disclosure, "prediction data" is to be interpreted as an estimate of the future values of one or more process variables. For the compressed air distribution system, the prediction data comprises at least one of estimated future pressure demand and/or estimated future airflow demand. The prediction data covers at least a prediction period, which may have a duration of seconds, minutes, hours, days or an even longer period. The duration of the prediction period may change from one iteration of the method to another. Preferably, the prediction data comprises time-series data wherein the estimates of the future variables are provided for one or more separate times instances during the prediction period. The prediction data may comprise estimated values and/or estimated confidence intervals and/or estimated bounds for one or more of the process variables. The prediction data may be generated based on models of the compressed air distribution system, past and/or current process variable data or other input data like production planning, maintenance planning, calendar data, holiday data or weather forecasting data.

In a second step of the method, characterising data is received. In the context of this disclosure, "characterising data" is to be interpreted as data that characterises the technical or functional properties of one or more parts of the compressed air system. The characterising data may be in the form of mathematical models, a look-up table, measurement data, a spec sheet or any other form of data that may be interpreted by the skilled person or by a suitable algorithm. The characterising data comprises at least data for each component of the set of components. The characterising data of each of the components comprises at least air flow data, air pressure data and energy consumption data. For the specific case of a compressor, it is useful to implement the compressor's operating envelope in the characterising data. This operating envelope represents the allowable operating region of the compressor in the air pressure - air flow plane and attributes an energy efficiency to the compressor for each of the operating points within this envelope.

In a third step of the method, one or more sets of continuously differentiable functions are determined. Such a set of continuously differentiable functions comprises one or more continuously differentiable functions, and each of the sets represents a unique sequence of operation of the components in the set of components. Each of the sets comprises at least one or more continuously differentiable functions that describe the pressure and/or airflow in the compressed air system and the energy consumption of the components. The unique sequence of operation of the components in each set is chosen such that the pressure and/or airflow in the compressed air system meet the prediction data for pressure and/or airflow demand for at least an initial portion of the prediction period. Preferably, the initial portion is a time period that is longer than the sum of the period that is required to complete one iteration of the method and the period that is required to bring at least one compressor of the set of components from a stand-still to a steady-state loaded condition. Possible choices for the continuously differentiable functions and for a sequence of operation of the components are disclosed in relation with embodiments of the invention in the remainder of this disclosure.

In a fourth step of the method, an optimal set is selected from the one or more set of continuously differentiable functions. The selection process is done such that the unique sequence of operation of the components associated with the selected subset results in pressure and/or airflow in the compressed air system that meet the prediction data for pressure and/or airflow demand for at least a second portion of the prediction period, wherein the second portion is longer than the initial portion of the prediction period. Preferably, the unique sequence of operation of the components associated with the selected optimal set results in pressure and/or airflow in the compressed air system that meet the prediction data for pressure and/or airflow demand for the entire prediction period. Preferably, the unique sequence of operation of the components associated with the selected optimal set results in an energy consumption of the compressed air system that is lower than the energy consumption associated to any other sequence of operation that meets the predicted demand for pressure and/or airflow. The skilled person will understand that other optimization criteria can be used. A possible method for selecting an optimal set is disclosed in relation with embodiments of the invention in the remainder of this disclosure.

In a fifth step of the method, configuration data is derived from the selected optimal set. In the context of this disclosure "configuration data" is to be interpreted as data that determines the command inputs to be applied to one or more parts of the compressed air system to impose the selected unique sequence of operation on the set of components. The configuration data comprises at least data for each component of the set of components. Examples of configuration data are the time instances at which a specific compressor should be started, stopped, loaded or unloaded, the speed at which a specific compressor should be operated, valve positions or the time instances at which valve positions should be changed or the flow rate of cooling circuits.

In a sixth step of the method, each of the components of the set is configured according to the configuration data.

It is an advantage of the method that the method allows for real-time simultaneous control of a set of components, taking into account not only the current state of the components and the compressed air distribution system but also the predicted future demand of the compressed air distribution system.

While the method is applicable to all of the components of the compressed air distribution system, the remainder of this disclosure will uniquely use compressors as exemplary embodiments of components. Since compressors are generally the most important, complex and difficult to control components of a compressed air distribution system, the skilled person will understand that they are the most useful embodiments for illustrating the possibilities of the method without any loss of generality.

The skilled person will recognize that, during normal operation, a compressor can be situated in one of three operating regimes or states, these states being:

- A stopped state, during which the moving parts of the compressor which transfer energy to the medium to be compressed - such as impellers, scrolls or pistons - do not move. Typically, during the stopped state, the motor driving the moving parts of the compressor also comes to a halt or the transfer of power between the motor and the moving parts of the compressor is interrupted by means of a clutch.
- An unloaded state, during which the compressor is powered by a motor, the compressor's moving parts are moving and displace a fluid, but this fluid is discharged at the same pressure as it's intake pressure. In a compressed air system, this may be achieved for instance by including a bypass valve after the compressor's exhaust which allows the compressor to discharge into the ambient air. Alternatively, the compressor's inlet could be throttled in which case the negligible airflow caused by the compressor can be discharged directly into the compressed air distribution system. Typically, the unloaded state is an intermediate step between the stopped state and the loaded state of the compressor. For some applications, especially those featuring large compressors, the time it takes the compressors to go from a stand-still to a normal operating speed might be too long when compared to the dynamics of the compressed air system's demand fluctuations. In such circumstances, the compressors might be kept in the unloaded state whenever they are not required.
- A loaded state, during which the compressor is powered by a motor, the compressor's moving parts are moving and displace a fluid, and this fluid is discharged into the compressed air system against the system's back pressure. For the purpose of this disclosure, a compressor is considered to be in the loaded state when it operates inside its normal operating envelope, and not when it exceeds one or more of its surge, choke, power or speed limits.

Outside of normal operation, a compressor can also be in shutdown, surge, choke, overspeed or even other states; these additional states will not be discussed in more detail. However, the skilled person will understand from the remainder of this disclosure that the method according to the present invention can also cope with these states. Preferably, the method will try to actively prevent these states. Furthermore, the skilled person will understand that also other components of the compressed air distribution system can be represented by their states, such as for instance valves.

In an embodiment of the method according to the present invention, each component in the set of components is represented by a state machine, also called a finite-state machine or finite-state automaton - a mathematical modelling technique to describe discrete state systems. For the purpose of the present method, a state machine model of a component preferably includes at least the different states, the information on how the states is interconnected and time dependent constraints related to the states.

A unique sequence of operation of the finite set of components is associated with each set of continuously differentiable functions. The selection of an optimal set thus comes down to selecting an optimal sequence of operation of the components of the set.

In an embodiment of the method according to the present invention, determining one or more sets of continuously differentiable functions comprises generating state space data representing possible sequences of operation of the set of components. Since the state space is limited in dimension by the number of components in the set and the number of possible states per component, the state space representing the possible sequences of operation is limited in dimension as long as the allowable number of transitions per component is limited over a given time horizon. The representation of components by state machines thus allows to transform an infinite space of possible sequences of operation into a finite space, which can be explored in an exhaustive manner.

Given the representation of a component by a state machine, a sequence of operation of the component then comprises at least information regarding (i) the initial state of the component, (ii) the state transitions that the components will undergo and (iii) the order in which the components will undergo these state transitions. The operation sequence of the component does not necessarily comprise the specific time instants at which the component will undergo the specific state transitions. By extension, a sequence of operation of the finite set of components controlled through the method of the present invention comprises a set of sequences of operation of the individual components of the set, comprising exactly one sequence of operation for every component of the set. In contrast, the configuration data derived by the method comprises an operation sequence of the set of components and, in addition, at least the time instants at which the state transitions should occur during the prediction period.

In an embodiment of the method according to the present invention, the state space data representing possible sequences of operation of the set of components is generated based on allowable state transitions from a previous state of one or more components of the set of components to a subsequent state of the one or more components of the set. Since the allowable transitions are dependent on the current state of the component, the allowable transitions are always limited in number. The representation of a sequence of operation by a sequence of state transitions thus allows to further reduce the dimensions of the state space wherein the sets of functions are determined, thereby reducing the computational cost of the method.

In an embodiment of the method according to the present invention, the state space data is pruned based on at least one boundary condition or a value of an objective function. This pruning allows to further reduce the dimensions of the state space wherein the sets of functions are determined, thereby reducing the computational cost of the method.

In an embodiment of the method according to the present invention, a set of continuously differentiable functions according to the method can be written as $(f(x, y), g(x, y))$, wherein $x \in X \subseteq R^{n_x}$, $y \in [0,1]^{n_y} \subset Z^{n_y}$. In these equations, $X$ and $[0,1]^{n_y}$ are a polyhedral subset and a bounded polyhedral subset of $R^{n_x}$ and $Z^{n_y}$ respectively and the objective function f: $R^{n_x+n_y} \to R$ and the constraint function $g: R^{n_x+n_y} \to R^m$ are assumed to be convex and twice continuously differentiable. The vector $x$ may comprise continuous variables of the compressed air system such as for instance pressure, air flow, temperature, relative humidity, the rotation speed of one or more compressors from the set of compressors or the time instants at which one or more compressors of the set of compressors switch to a different state. The vector $y$ comprises the state variables of each component from the set of components.

The skilled person will recognize that, in the context of minimizing the compressed air system's energy consumption, the objective function f comprises a measure of the energy consumption of the system such as for instance the instantaneous energy consumption of the system or the total energy consumption over the prediction period. The objective function f may comprise additional terms that represent a direct or indirect measure of the system's energy consumption or energy efficiency. The objective function $f$ may comprise other terms. Likewise, the skilled person will recognize that the constraint function $g$ may comprise equations modelling the components of the system or equations describing the process variables such as for instance pressure, air flow, air temperature and relative humidity.

The step of selecting an optimal set of continuously differentiable functions then comprises the problem of the minimization of $f(x, y)$, subject to the boundary conditions $lb \le g(x, y) \le ub$, wherein the lower boundary $lb$ and the upper boundary $ub$ may comprise the predicted future pressure and/or airflow demand, as well as additional boundary conditions imposed by the system or a consumer connected to the system. For instance, the boundary conditions may comprise the maximum temperature and/or maximum relative humidity of the compressed air or the maximum rotation speed of one or more of the compressors. This problem is a mixed integer non-linear problem.

In this embodiment, the step of selecting an optimal set of continuously differentiable functions then comprises searching at least a local minimum of the objective function $f(x, y)$.

In an embodiment of the method according to the present invention, the local minimum of the objective function is searched using a branch & bound algorithm. It is an advantage of the usage of the branch & bound algorithm that the algorithm allows for the systematic exploration and pruning of the state space.

In an embodiment of the method according to the present invention, the time instants at which a component of the set of components undergoes a specific state transition of the sequence of operation is determined so as to achieve a local minimum of the objective function $f(x, y)$. The method has two degrees of freedom to achieve optimal control. The first degree of freedom relates to the choice of the sequence of operation of the components of the set. For this degree of freedom, the available state space is explored using for instance a branch & bound algorithm or any other suitable approach. The second degree of freedom relates to the choice of the time instants at which the state transitions of a sequence of operation take place. To determine these time instants, the mixed integer non-linear problem of the minimization of $f(x, y)$, subject to the constraints $lb \le g(x, y) \le ub$ needs to be solved.

In an embodiment of the method according to the present invention, the characteristic data further comprises minimal start-up energy data and/or minimal activity period after start-up data and/or average maintenance time for at least one component of the set of components.

In an embodiment of the method according to the present invention, iteratively repeating comprises repeating the steps of the method at discrete, regular time intervals.

In an embodiment of the method according to the present invention, the prediction period is time dependent. The prediction period may change for instance if the dynamics of demand int the compressed air distribution system change. With lower dynamic demand fluctuations, the prediction data may extend over a longer time horizon and vice versa.

In an embodiment of the method according to the present invention, the initial portion of the prediction period is determined based on at least the maximal processing power of a data processing means performing the method.

A second aspect of the invention concerns a data processing system comprising means for carrying out the method according to the first aspect of the invention.

A third aspect of the invention concerns a computer program comprising instructions which, when the program is executed by a computer, cause the computer to carry out the method according to the first aspect of the invention.

A fourth aspect of the invention concerns a compressed air or gas system configured to be controlled according to the method of the first aspect of the invention.

## Brief description of the drawings

Figure 1 schematically illustrates a compressed air system that is controlled according to the invention.

Figures 2a and 2b schematically illustrate a state machine representation of a compressor.

Figures 3a and 3b schematically illustrate the time switches as employed in embodiments of the method to represent state transitions.

Figures 4a and 4b illustrate a flow diagram of an embodiment of the method according to the invention.

Figures 5a-5h illustrate the results of the execution of an embodiment of the method according to the invention.

## Detailed description of embodiments

The present disclosure will be described in terms of specific embodiments, which are illustrative of the disclosure and which are not to be construed as limiting. It will be appreciated that the present disclosure is not limited by what has been particularly shown and/or described and that alternatives or modified embodiments could be developed in the light of the overall teaching of this disclosure. The drawings described are only schematic and are non-limiting.

Reference throughout this description to "one embodiment" or "an embodiment" means that a particular feature, structure or characteristic described in connection with the embodiments is included in one or more embodiment of the present disclosure. Thus, appearances of the phrases "in one embodiment" or "in an embodiment" in various places throughout this specification are not necessarily all referring to the same embodiment, but it may. Furthermore, the particular features, structures or characteristics may be combined in any suitable manner, as would be apparent to one of ordinary skill in the art from this disclosure, in one or more embodiments.

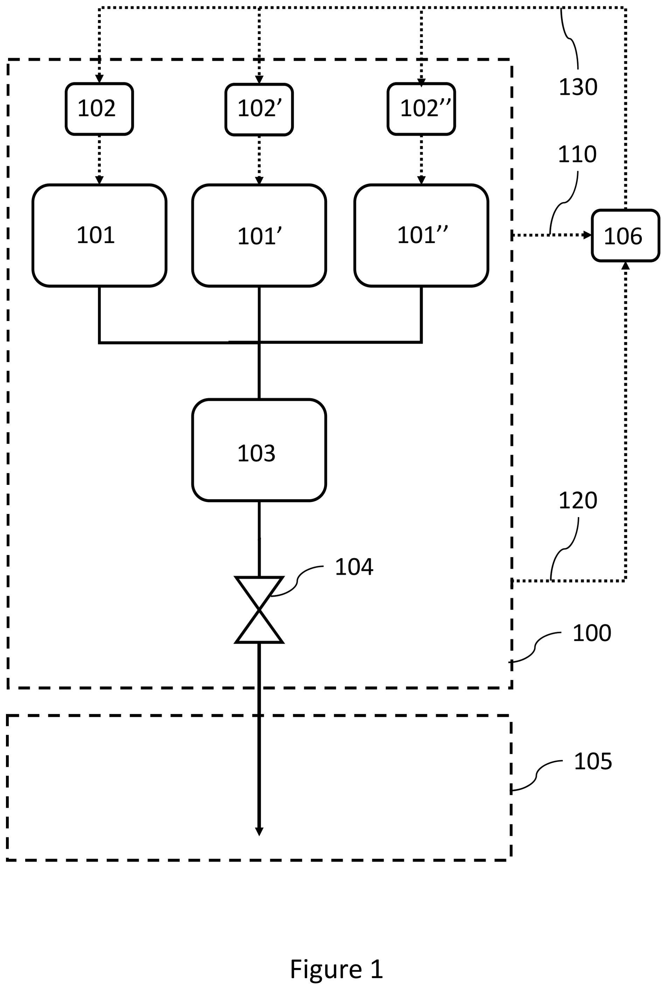

Figure 1 illustrates a compressed air or gas system 100 comprising three compressors 101, 101' and 101" configured to provide compressed air or gas to a client network 105. The compressed air or gas system 100 further comprises a vessel or tank 103 for storing compressed air or gas and a valve 104 connected to the client network 105. At the client's network 105 one or more consumers are present. It should be further understood that the compressed air or gas system 100 may further comprise other devices such as dryers, filters, regulators, and/or lubricators, but in the continuation of this text, the invention will be illustrated with reference to Figure 1 as a set-up of the compressed air or gas system 100. In Figure 1, full lines indicate fluid connections whereas dotted lines indicate data connections.

The compressors 101, 101', 101" are each locally controllable by a respective controller 102, 102', 102". Further, to efficiently control the compressed air or gas system 100, the controllers 102, 102', 102" will be controlled in a coordinated manner. In other words, it is avoided that the controllers 102, 102', 102" each individually control their respective compressor 101, 101', 101". Yet, the controllers 102, 102', 102" are instructed by a master controller 106 such that the overall performance and efficiency of the compressed air or gas system 100 is increased.

The controller 106 may be located near the controllers 102, 102', 102" but may also be located on a remote place compared to the compressed air or gas system 100. Alternatively, one of the controllers 102, 102', 102" can be configured to act as the master controller for controlling all the compressors 100, 100', 100".

Through the controller 106 the running, switching and idle costs of the compressed air or gas system 100 are tackled thereby reducing wear of components of the different devices while at the same time the energy consumption thereof is optimized. To this end, the controller 106 utilizes an embodiment of the method according to the present invention. The controller 106 receives characterizing data 110 which describes the technical or functional properties of one or more parts of the compressed air system. This characterizing data may be obtained from a database, a model, measurements effected on one or more parts of the compressed air system 105 or any other suitable means. Further, the controller 106 also receives prediction data 120 which describes at least the future predicted airflow and/or pressure demand of the client's network. Again, this prediction data may be obtained from a database, a model, measurements effected on one or more parts of the compressed air system 100 or client network 105 or any other suitable means. Based on the characterizing data 110, the prediction data 120 and the method of the present invention, the controller 106 sends configuration data 130 to the controllers 102, 102', 102" to coordinate the control of the compressors 101, 101', 101".

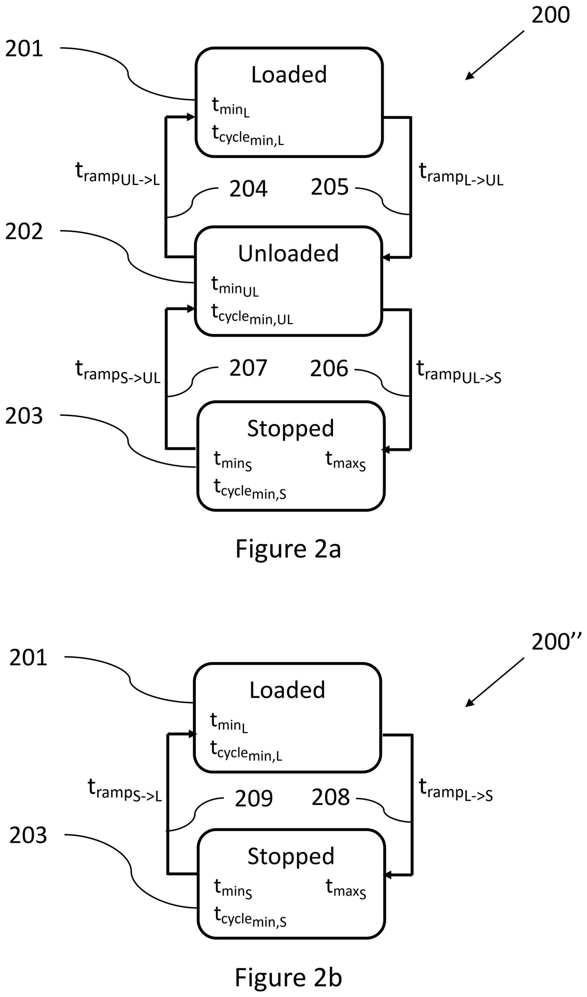

Figures 2a and 2b schematically illustrate a state machine representation 200, 200" of a compressor. The state machine 200 of Figure 2a comprises three possible states: the loaded state 201, the unloaded state 202 and the stopped state 203. Each state comprises at least two parameters: the minimum time the compressor needs to spend in the specific state, indicated by $t_{minL}$, $t_{minUL}$ and $t_{mins}$ for the loaded, unloaded and stopped state respectively and the minimum time the compressor needs to stay in a different state before it can return to the specific state, indicated by $t_{cycle_{min,L}}$, $t_{cycle_{min,UL}}$ and

$t_{cycle_{min,S}}$ for the loaded, unloaded and stopped state respectively. The stopped state comprises an additional parameter $t_{max_S}$, representing the maximum time that the compressor can spend in the stopped state. The skilled person understands that in specific embodiments the loaded and unloaded state may also be restricted to a maximum duration or that the states may comprise additional parameters. In addition, the skilled person understands that the specific parameter values may change from one compressor to another and may depend amongst others on the type of compressor or the operating conditions.

Figure 2a also indicates the state transitions to adjacent states: the transition 204 from the unloaded state 202 to the loaded state 201, the transition 205 from the loaded state 201 to the unloaded state 202, the transition 206 from the unloaded state 202 to the stopped state 203 and the transition 207 from the stopped state 203 to the unloaded state 202. Each transition comprises at least a parameter representing the time required to complete the transition, indicated by $t_{ramp_{UL \to L}}$, $t_{ramp_{L \to UL}}$, $t_{ramp_{UL \to s}}$ and $t_{ramp_{S \to UL}}$ for transitions 204, 205, 206 and 207 respectively. The times required to complete the transition may differ between the different state transitions. In addition, the skilled person understands that the specific parameter values may change from one compressor to another and may depend amongst others on the type of compressor or the operating conditions.

The state machine 200" of Figure 2b comprises only two possible states: the loaded state 201 and the stopped state 203. As a consequence, the state machine 200" of Figure 2b only has two possible state transitions: a transition 208 from the loaded state to the stopped state and a transition 209 from the stopped state to the loaded state. State machine 200 may also be capable of transitions 208 and 209, but these have not been indicated on Figure 2a so as not to clutter the figure.

When compared to the state machine representation 200 of Figure 2a, the state machine 200" of Figure 2b offers a lower computational complexity due to the reduced number of states and transitions. The representation of a compressor by state machine 200" may be advantageous when the available computational power is not sufficient to determine the optimal operating sequence of a compressor in real-time using state machine representation 200. Such situations may for instance arrive when a large number of compressors need to be controlled simultaneously or when the airflow demand of the compressed air system varies strongly and unpredictably. The trade-off of the reduced number of degrees of freedom of state machine 200" is that it allows for less fine-grained control of a compressor. In addition, for some compressors, it might not be possible to transition immediately from the stopped state to the loaded state.

An embodiment of the method of the present invention may employ either of both state machines to represent the compressors in the set of compressors. In addition, the method may employ both representations simultaneously, representing some compressors in the set by a state machine having three states while representing other compressors in the set by a state machine having only two states. Also, during execution of the method, the method may switch dynamically between both state machine representations to represent one or more compressors, thereby dynamically altering the balance between execution speed of the method and accuracy of control.

Finally, the skilled person understands that the method of the present invention is not limited to representing compressors only by state machines comprising two or three states; more states - each state representing a distinct operation regime of a compressor - may be added to the state machines. By extension, the description above is equally valid for state machine representations comprising more than three states.

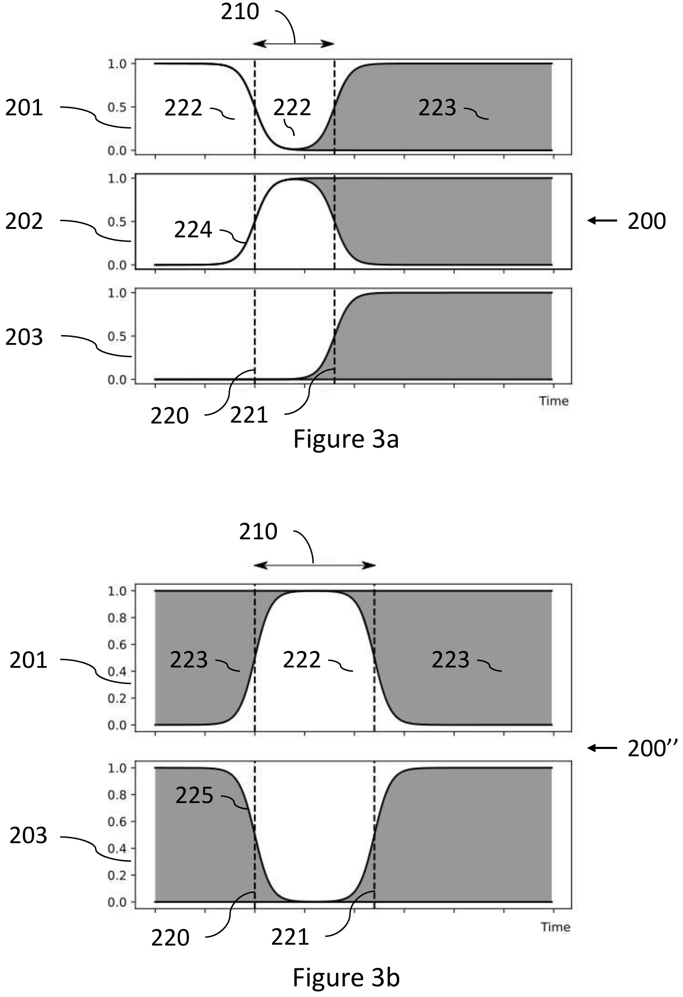

Figures 3a and 3b schematically illustrate two types of time switches that may be employed by embodiments of the method to represent state transitions of the one or more compressors as a function of time. Both of these types of time switches rely on a ramp in time, which can be represented by a sigmoid function:

$$R\big(t, t_s, t_{ramp}\big) = \sigma\left(\frac{t - t_s}{t_{ramp}/c}\right)$$

wherein $t$ represents time. The ramp $R$ changes value from 0 to 1 around the switching time $t_s$ and takes a time $t_{ramp}$ to perform this switch. The ramp $R$ can thus be used to represent a noninstantaneous state transition occurring around $t_s$ and taking a time $t_{ramp}$. The parameter c is a correction factor c depending on the sigmoid function used. For instance, in case of a logistic function, this correction factor is equal to 5. Embodiments of the method may employ various kinds of step functions to represent state transitions, such as for instance a piecewise ramp. The only requirements for the function representing a state transition are that the first order derivative of the function with respect to t (i) exists, (ii) is bounded and (iii) is always non-zero for at least one discrete time point in the horizon, independent of the value of $t_s$.

Figure 3a schematically illustrates a state machine representation 200 of a compressor having three states, a loaded state, an unloaded state and a stopped state, represented by the reference numbers 201, 202 and 203 respectively. In the beginning of the time horizon, the compressor is in the loaded state 201, mathematically indicated by the value of state 201 being equal to 1. Since by definition, the different states of a state machine are mutually exclusive, the compressor cannot be in the unloaded or the stopped state. This is mathematically imposed by requiring that the sum of the values of all states of the machine must equal 1.

In Figure 3a, a sequence of operation comprising a state transition from the loaded state 201 to the unloaded state 202 is imposed on the compressor. Thus, a time switch 224 is introduced which brings the loaded state from a value of 1 to a value of 0 and the unloaded state from a value of 0 to 1 around the first switching time 220. Also during the switching period, the sum of the values of all states remains equal to 1. Prior to initiation of time switch 224, the state of state machine 200 is known; the time period from the initial time to initiation of time switch 224 is thus a period of state certainty 222 for machine 200. Since the state machine is in a known state adjacent to time switch 224, a time switch having this same property will be referred to as an "adjacent switch" in the remainder of this disclosure. An adjacent switch can only be imposed on a state machine adjacent to a period of state certainty, i.e. after a period during which the state of the machine is known. Note that the concept of adjacent switch may also be used backwards in time and that an adjacent switch can be imposed prior to a period of state certainty. This may be useful when the final state of the machine at the end of the period is known, rather than the initial state of the machine.

After completion of time switch 224, machine 200 must remain in the unloaded state 202 for a minimum amount of time 210. Therefore, the machine is in a period of state certainty 222 for at least the minimum amount of time 210 after the initiation of time switch 224. Once this period has elapsed, machine 200 is in a period of state uncertainty 223 - during which the state variables of the machine may have any value, as long as the sum of their values equals one - and may, optionally but not necessarily, undergo another state transition, for instance a transition around second switching time 221.

Mathematically, imposing an adjacent time switch on a state machine leads to the addition of the following set of equations to the constraint function $g(x, y)$:

$$\left| x_{m,s_k,i} + \sum_{j=1}^{n_s} c_j R\left(t_i, t_{switc\,,m,j}, t_{ramp,j}\right) \right| \le R\left(t_i, t_{swi\,\,\,,m,n_s}, t_{ramp,j}\right)$$

$$\forall s_k \in S_m, \forall t_i \in T, \forall m \in M; c_i \in \{-1,0,1\}^{n_s}$$

$$t_{switch,m,j} + t_{min,s_j} \le t_{switc\,,m,j+1} \forall j \in [0, n_s - 1]$$

wherein $s_k \in S_m$ the set of all states of machine $m$, $m \in M$ represents the set of all machines, $t_i \in T$ represents the set of all time instances, $n_s$ is the size of $S_m$, $x_{m,s_k,i}$ is the value of state $s_k$ of machine $m$ on time instance $t_i$ and $t_{swi,m,j}$ is the time on which machine m will switch to state $s_j$. The unknowns in the above equations are the switching times, which will be added to the variable vector x and determined by the solution algorithm. For every adjacent switch imposed on every machine, the above equations will be added to $g(x, y)$.

Figure 3b schematically illustrates a state machine representation 200" of a compressor having two states, a loaded state and a stopped state, represented by the reference numbers 201 and 203 respectively. In the beginning of the time horizon, the state of the compressor is unknown. On the switching time 220, a time switch 225 is introduced which makes the machine transition into the loaded state 201. Since the machine must mandatorily stay in the loaded state for a minimum period of time 210, the state of the machine is known for this period. The introduction of time switch 225 thus leads to a period of state certainty 222 during which the state of machine 200" is known and the values of its state variables are fixed. The length of period 222 is equal to the minimum period that the machine needs to stay in the specific state. However, after expiry of the minimum period or prior to the initiation of time switch 225, machine 200" is in a period of state uncertainty 223. Since the introduction of time switch 225 is independent of the knowledge of the state of machine 200" and may thus happen anywhere in the time horizon, a time switch having this same property will be referred to as an "free-floating switch" in the remainder of this disclosure.

Mathematically, imposing a free-floating time switch on a state machine leads to the addition of the following set of equations to the constraint function $g(x, y)$:

$$\left(1 - x_{m,s_j,i}\right) \le \left(1 - R\left(t_i, t_{switch,j}, t_{ramp}\right)\right) + R\left(t_i, t_{swith,j+1} - t_{m\,\,k}, t_{ramp}\right)$$

$$x_{m,s_k,i} \le \left(1 - R\left(t_i, t_{switch,j}, t_{ramp}\right)\right) + R\left(t_i, t_{swith,j+1} - t_{m\,\,k}, t_{ramp}\right) \forall s_k \in S_m, s_k \ne s_j$$

Just as for the adjacent switch, the unknowns in the above equations are the switching times, which will be added to the variable vector x and determined by the solution algorithm. Just as for the adjacent switch, for every free-floating switch imposed on every machine, the above equations will be added to $g(x, y)$.

Embodiments of the method may implement adjacent or free-floating switches and may combine both. Both types of switches can further be extended to include a tolerance around the ramp so that the state variable can achieve an integer value after completion of the switch. This is useful if other constraints prevent a transition between integer values for the state variables.

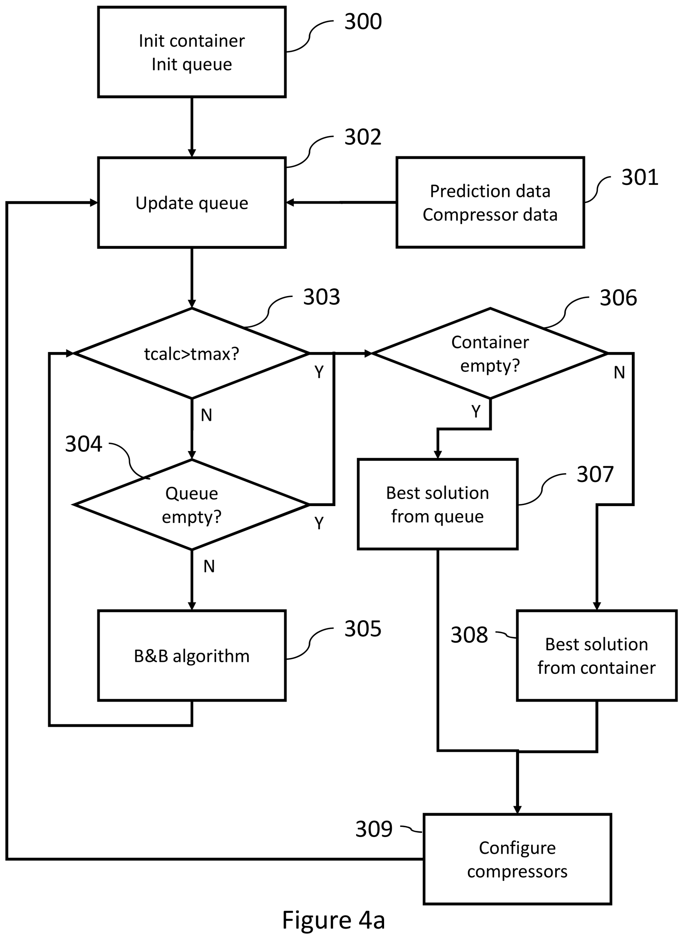

Figure 4a shows a flow diagram of an embodiment of the method according to the present invention. Before the iterative execution of the method, an initialization step 300 takes place. During this initialization step, a queue and a container, are created. Both the queue and the container are empty at this point.

The first step in the iterative method is the data collection step 301. During this data collection step, both characterising data for the one or more compressors and prediction data for the compressed air system are collected.

In step 302, the queue is updated. Upon the first iteration of the method, this updating concerns the creation of a first set of continuously differentiable equations $(f(x, y), g(x, y))$ and the associated problem of the minimization of $f(x, y)$, subject to the boundary conditions $lb \leq g(x, y) \leq ub$. This set of equations and the associated problem is added as an item to the queue. From the second and upon further iterations of the method, updating step 302 may serve a different purpose as will be explained further in the disclosure of this embodiment.

Since the method of the present invention is aimed at real-time control of a set of one or more compressors, the method only has a finite amount of time to be executed. This amount of time may be constant and based on known characteristics of the system or it may be variable. For instance, the method may calculate the maximum amount of time for execution based on the received prediction data in every iteration. Timer 303 keeps track of the time elapsed during the execution of the calculation part of the method; if the calculation time exceeds the predetermined maximum time, timer 303 interrupts the calculation and makes the method proceed to the next iteration step.

During execution of the method, items - corresponding to sets of continuously differentiable equations, each representing a unique sequence of operation of the compressors, and their associated minimization problem - may be added or removed from the queue. In step 304, the method checks whether the queue still contains items. If the queue becomes empty, step 304 makes the method proceed to the next iteration step before the maximum amount of time for the iteration has elapsed.

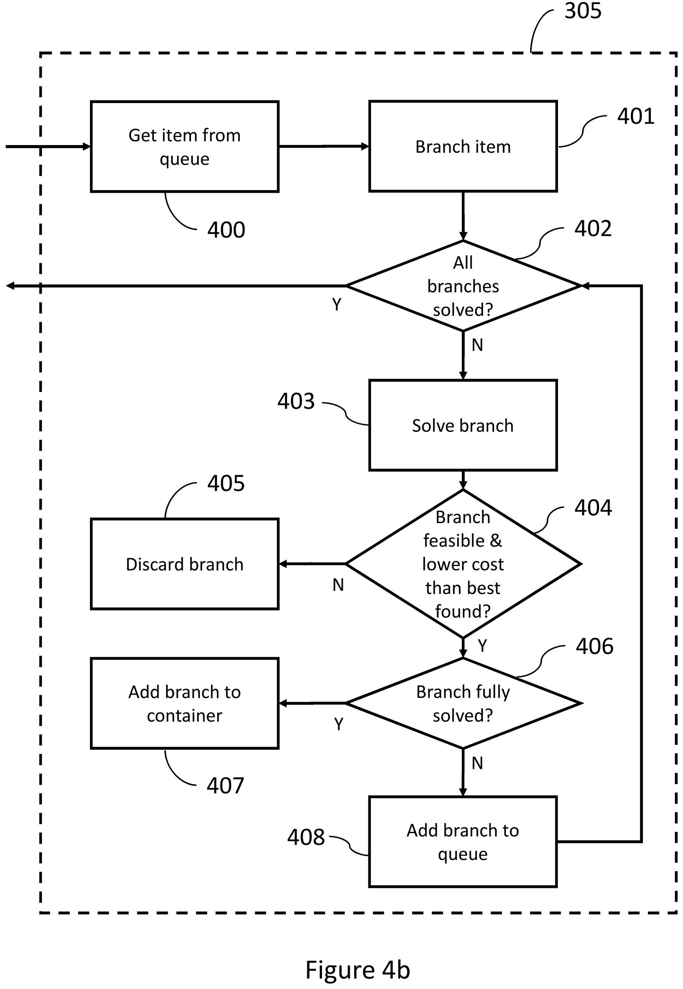

In step 305, the method attempts to solve one or more of the items in the queue using a branch and bound algorithm; this algorithm is illustrated in more detail in Figure 4b. The branch & bound algorithm adds fully solved items to the container, further, the algorithm may add partially solved items to the queue and/or may remove items from the queue.

Once the method has broken the calculation loop, either because the maximum period for a single iteration has expired or because the queue has become empty, the method checks in step 306 whether the container comprises fully solved solutions. If it does, in step 308, the best solution - meaning the solution with the lowest cost for the objective function $f(x,y)$ is selected from the container.

Alternatively, in case where the container is empty, step 307 selects the best (partially solved) solution from the queue and derives configuration data from this best solution. Since in this case, the best solution does not cover the entire extent of the prediction period for which prediction data is available, there remains uncertainty as to whether the selected sequence of operation will be capable of meeting the predicted pressure and/or airflow demand. This issue may be addressed in a postprocessing step of step 307. In such a post-processing step, multiple criteria may be applied to identify the risk that the incomplete sequence of operation will not be capable of meeting the predicted pressure and/or airflow demand. For instance, it may be checked whether all compressors in the set are capable of loading during the remainder of the prediction period for which the item is not fully solved. If the selected best solution satisfies the post-processing criterion, it may be maintained. Otherwise, it may be rejected and a different solution may be picked from the queue as best solution.

Subsequently, configuration data is derived from this best solution and in step 309, the compressors of the system are configured based on the configuration data. This completes a single iteration of the method.

Upon starting the second iteration of the method, the first step is again data collections step 301. However, at this moment, the queue and container are not necessarily empty. If the container contains items, these items are added to the queue and the container is emptied. Subsequently, the items in the queue are shifted in time. If the items in the queue do not comply with the updated states of the compressors, the items are removed from the queue. Finally, the items in the queue are updated with the new prediction data.

Figure 4b shows a flow diagram of an embodiment of a branch & bound algorithm 305. The input to the branch & bound algorithm is the queue holding unsolved or partially solved problems - also called items - wherein each problem corresponds to a unique sequence of operation of the compressors. The outputs of the branch & bound algorithm are the updated queue and container. The branch & bound algorithm relies on three separate algorithms: a selection algorithm to select an item from the queue, a branching algorithm to branch an item and a solving algorithm to solve an item.

In step 400, a selection algorithm selects an item from the queue. The algorithm may utilize one of multiple criteria to determine which item it will pick. Examples of such criteria are:

- Best First: The algorithm always picks the item with the lowest value for the objective function $f(x, y)$. This approach is straightforward to implement and can achieve the most optimal solution in the least amount of calculation time without using heuristics. However, it might take a longer time than other criteria to obtain a first solution that is feasible and fully solved over the entire prediction period.

- Alternating Best First: This is an algorithm that builds upon the best first algorithm. Instead of exploring the best first algorithm of the whole tree, it will partition the tree and apply the best first algorithm alternating on every partition of the tree. For trees with very long running branches, this provides a good alternative to achieve a good solution within a shorter time than the 'Best First' approach.
- Breath first: The algorithm picks the item that is first in the queue.
- Depth First: The algorithm picks the partially solved item that is already solved over the longest time horizon. After reaching a feasible and fully solve solution, the method may further explore the rest of the queue using a different approach.
- Weighted depth and cost: The algorithm strikes a balance between optimization of the computational speed using a "depth first" approach and minimization of the cost function using a "best first" approach. Usually, this approach will yield a faster but less optimal solution than the "depth first" approach and a slower but more optimal solution than the "depth first" approach.
- Heuristic: A heuristic is defined that tries to estimate in which direction the algorithm should be heading. This heuristic could be based on the application.

The algorithm may switch between one or more of the above criteria between different iterations of the method. The algorithm may switch between or combine one or more of the above criteria during one iteration of the method.

In step 401, a branching algorithm creates branches from the item that was selected from the queue in step 402. The created branches are thus "children" of the originally selected item, which is the "parent". In this context, generating a branch entails the addition of a single state transition to the sequence of operation of the parent, thereby generating a new unique sequence of operation and a new associated mathematical problem. Mathematically, the generation of a branch comprises the addition of a set of equations representing a time switch to the constraint function $g(x, y)$ of the parent. These equations have been discussed in the context of Figures 3a and 3b.

The state transitions that can be added to the existing sequence of operation are limited by the underlying state machine representations. It may be possible to generate multiple branches from a single parent. However, the branching algorithm does not necessarily generate all possible branches. For instance, the branching algorithm might only branch from the compressor that is the least solved in time, i.e. the machine that still has the largest zone of state uncertainty over the prediction period. Alternatively, the branching algorithm might only branch from the machine that is responsible for the highest energy consumption. The branching algorithm may combine different branch creation strategies within a single iteration or may switch branch creation strategies between iterations of the method. The branch creation strategy employed may be specifically adapted to the underlying application.

In the context of Figures 3a and 3b, two types of time switches have been introduced: the adjacent switch and the free-floating switch. The branch creation algorithm decides on the kind of switch to introduce to impose a state transition. In the context of model predictive control, adjacent switches are preferred. Since the initial states are known, the use of adjacent switches the solution of the using with a time-forward method, which enables the method to reach a feasible solution for an initial part of the time horizon early in the calculation phase. Consequently, the branching process can be interrupted before a complete solution is reached on the condition that the feasibility of the partially solved problems can be assured in the unsolved time range. In compressor control, this can be done by postprocessing that all compressors should be able to load in the unsolved time horizon.

In contrast, free-floating switches are computationally more expensive because they create more branches. However, in some special cases, their use can lead to a faster solution. One of these cases is when the unconstrained state variables are already close to an integer value at a certain point in time. An additional drawback of the use of free-floating switches is the complexity of their implementation; a dedicated algorithm is necessary to calculate possible switching routes between two different states to ensure that no infeasible sub solutions are generated.

After generation of the branches, a solution algorithm will attempt to solve all the branches. Step 402 checks whether all branches have been solved. If this is the case, the branch & bound algorithm ends and the method goes back to the time checking step 303 of Figure 4a. If all generated branches are not solved, the method proceeds to the solution algorithm of step 403.

In step 403, a solution algorithm attempts to solve a specific problem - associated to a unique sequence of operation. Mathematically, the problem is the minimization of the objective function $f(x, y)$, subject to the constraints $lb \leq g(x, y) \leq ub$, wherein $x \in X \subseteq R^{n_x}, y \in [0,1]^{n_y} \subset Z^{n_y}$. In these equations, $X$ and $[0,1]^{n_y}$ are a polyhedral subset and a bounded polyhedral subset of $R^{n_x}$ and $Z^{n_y}$ respectively and the objective function $f: R^{n_x+n_y} \to R$ and the constraint function $g: R^{n_x+n_y} \to R^m$ are assumed to be convex and twice continuously differentiable. The unique sequence of operation associated to the specific problem is reflected in the constraint function through the addition of a set of time switching equations for every transition imposed on every machine. The problem to be solved is a so-called Mixed Integer Non-Linear Problem (MINLP), which can be solved using existing solvers such as for instance BARON, BONMIN, KNITRO or NAG.

Typically, in a first sub-step of the solution algorithm, a linear relation of the MINLP will be performed by linearizing the objective and constraint functions around the relaxed variables $\hat{x}$ and $\hat{y}$, wherein $\hat{x} \in X \subseteq R^{nx}$, $\hat{y} \in (0,1)^{ny} \subset R^{ny}$. The relaxed state variables $\hat{y}$ are thus no longer restricted to the integer numbers. If the relaxed problem is feasible - meaning that the constraints can be met - the relaxed state variables $\hat{y}$ are restricted to the integer state variables $y$ through rounding up or down. This restriction is only done in the constrained zone - the time period over which the problem is solved and where the states of the machines are supposed to be fixed. In the unconstrained zone where the machines can occupy any state, $\hat{y}$. Subsequently, the original problem is solved using $\hat{x}$, $y$ (in the constrained zone) and $\hat{y}$ (in the unconstrained zone) as starting values to obtain $x$, and thus the switching times for the state transitions in the imposed sequence of operation.

In step 404, the algorithm checks if the problem is also integer feasible - meaning that the constraints can be met when the state variables are restricted to integer values. Additionally, step 404 also checks whether the cost of the objective function of the branch is lower than the lowest objective cost that has been attained in another branch in other fully-solved branches. If both conditions are not met, the specific branch is discarded in step 405. If this is the case, the method checks in step 406 whether this branch is fully solved - i.e. whether the states of the machines are constrained for the entire time horizon of the prediction period for which prediction data was available. If the branch is fully solved, the associated sequence of operation and objective cost are stored in the container in step 407. If the branch is not fully solved, the branch is added to the queue in step 408. In a next iteration of the branch & bound algorithm, this branch may then get picked as parent to branch from.

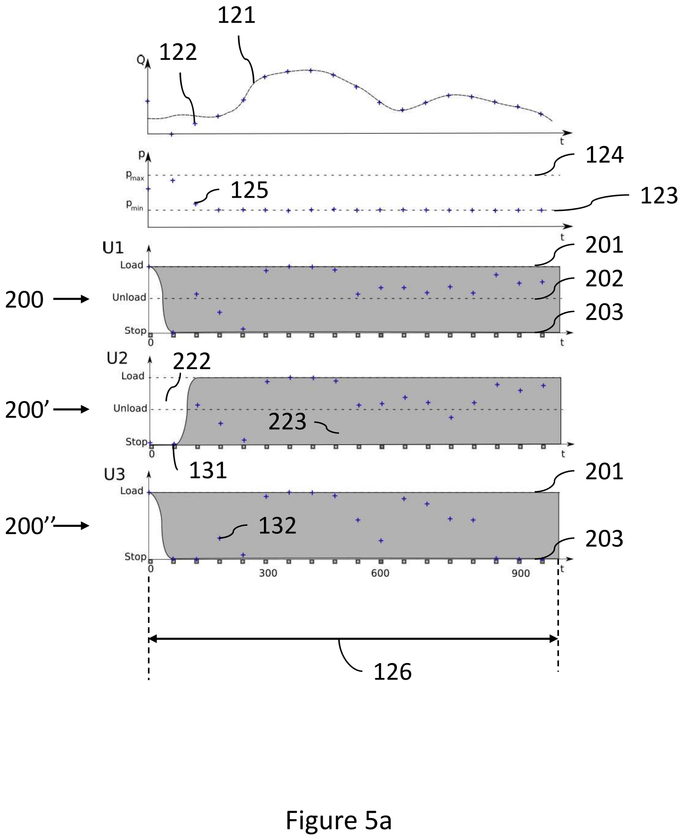

Figures 5a-5i illustrate the results of the execution of an embodiment of the method according to the invention. In the embodiment of Figures 5a-5h, the set of compressors comprises three machines, named U1, U2 and U3 and represented by state machines 200, 200' and 200" respectively. Machines 200 and 200' are assumed to have 3 accessible states: the loaded state 201, the unloaded state 202 and the stopped state 203. Machine 200" is assumed to have only two accessible states: the loaded state 201 and the stopped state 203. Prediction data for the compressed air network connected to the three compressors is available for a prediction period 126. The prediction data comprises a prediction of the future airflow demand 121 and predictions for the future minimum 123 and maximum pressure demand 124. Note that not all reference numbers have been added to every subplot of the figure to improve the readability of the figure.

Figure 5a shows that initially, machines 200 and 200" are in the loaded state 201 and machine 200' is in the stopped state 203. Machine 200' must mandatorily stay in the stopped state for at least one time iteration. This may happen for instance because the machine was previously in a stopped state and its minimum amount of time in the stopped state hasn't expired yet. Machines 200 and 200" however may change state from the beginning of the time horizon. The cross symbols indicate the values that have been calculated by the branch & bound algorithm for calculated airflow 122, calculated pressure 125 and the state variables. In the period of state certainty 222, the state of a machine is known and the calculated state variables are constrained state variables 131. In contrast, in the period of state uncertainty 223, the state of a machine is not known and the calculated state variables are unconstrained state variables 132.

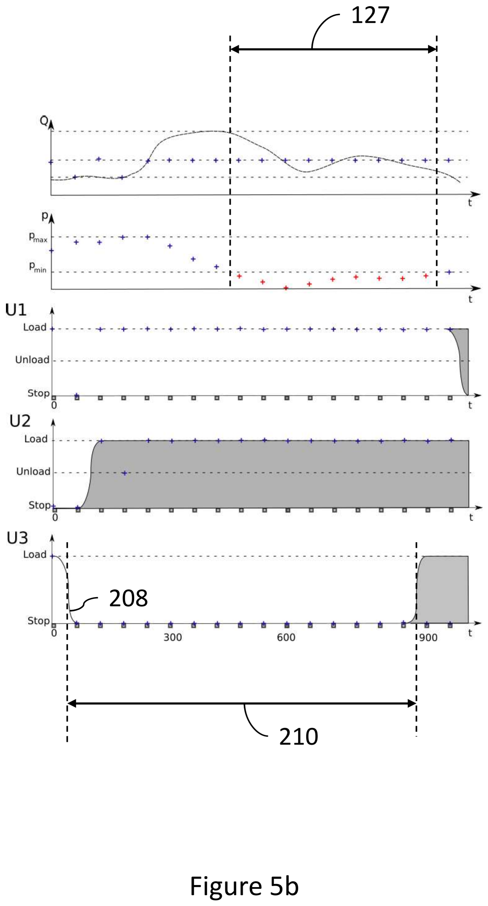

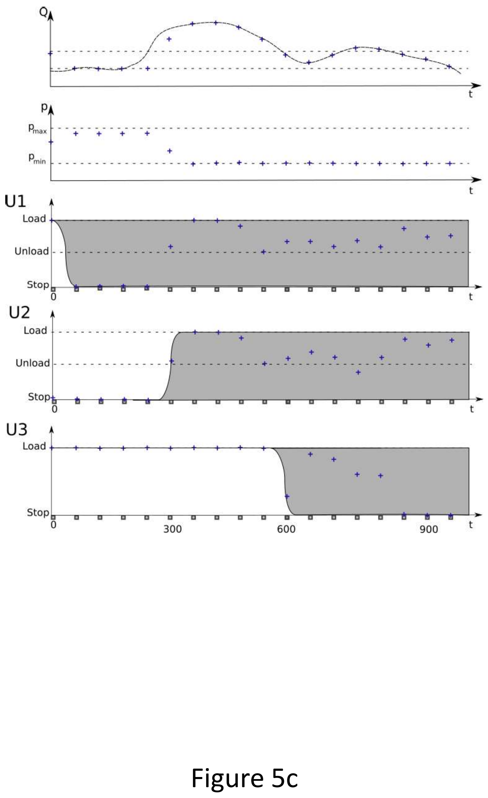

The solution of Figure 5a comprises periods of uncertainty 223 and is thus only partially solved. The branching algorithm assumes that the most gain can be achieved by adding a state transition on machine 200" and creates two branches from the existing partial solution of Figure 5a, represented in Figures 5b and 5c, and adds these branches to the queue. After creation of the branches, represented in Figures 5b and 5c, the parent, represented in Figure 5a, is discarded.

In the branch of Figure 5b, a transition 208 from the loaded to the stopped state is imposed on machine 200". Since machine 200" is stopped, it needs to remain in the stopped state for a minimum amount of time 210. The solution algorithm determines that, due to the absence of the stopped state, machine 200 needs to be constrained in the loaded state for the entire time horizon. Furthermore, the solution algorithm determines that - even if machine 200' would transition from the stopped to the loaded state - the set of compressors could not meet the minimum pressure demand 123 during a period 127. The branch of Figure 7b is thus not feasible and is removed from the queue.

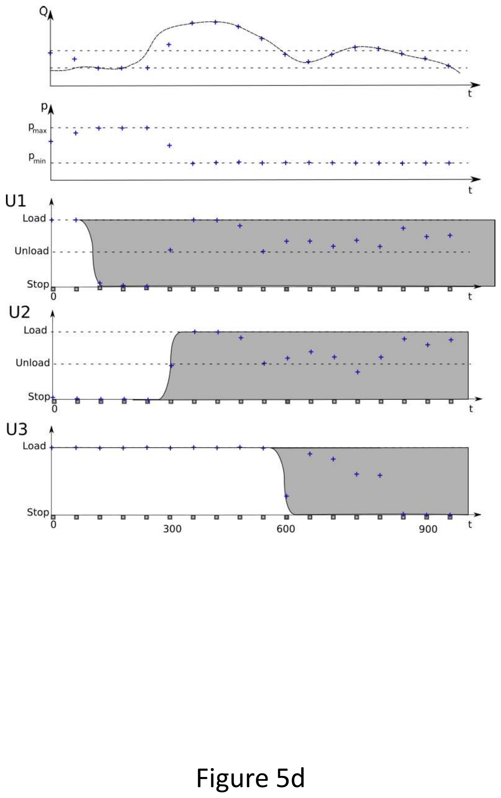

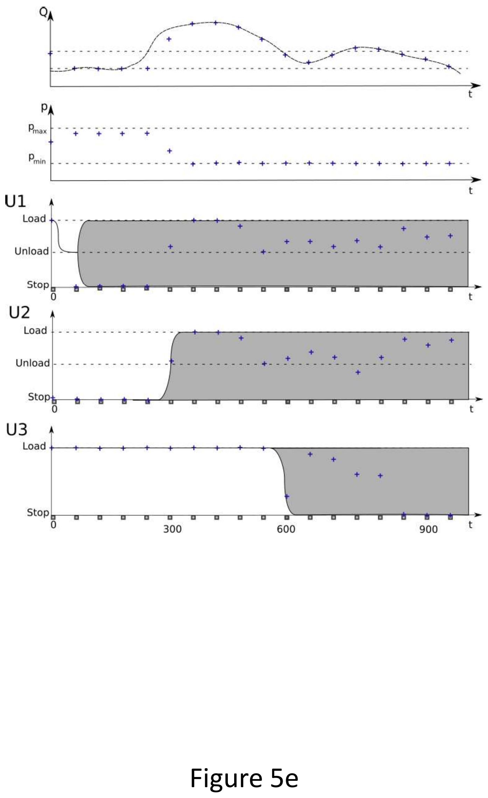

In contrast, in the branch of Figure 5c, machine 200" is maintained in the loaded state 201. The solution algorithm determines that under these conditions, it is optimal for machine 200' to remain constrained in the stopped state until a time of roughly 300 seconds, whereas it is optimal for machine 200" to remain constrained in the loaded state until a time of roughly 600 seconds. Under this sequence of operation, the compressors can meet the predicted future airflow and pressure demand. The branch is thus feasible. Since the time horizon of the branch contains regions of state uncertainty 223, the branch is not fully solved and is maintained in the queue. Because the state of machine 200 has not been constrained over any part of the time horizon, machine 200 is the least solved. Hence, the branching algorithm assumes that the most gain can be achieved by adding a state transition on machine 200 and creates two branches from the existing partial solution of Figure 5c, represented in Figures 5d and 5e, and adds these branches to the queue. After creation of the branches, represented in Figures 5d and 5e, the parent, represented in Figure 5c, is discarded.

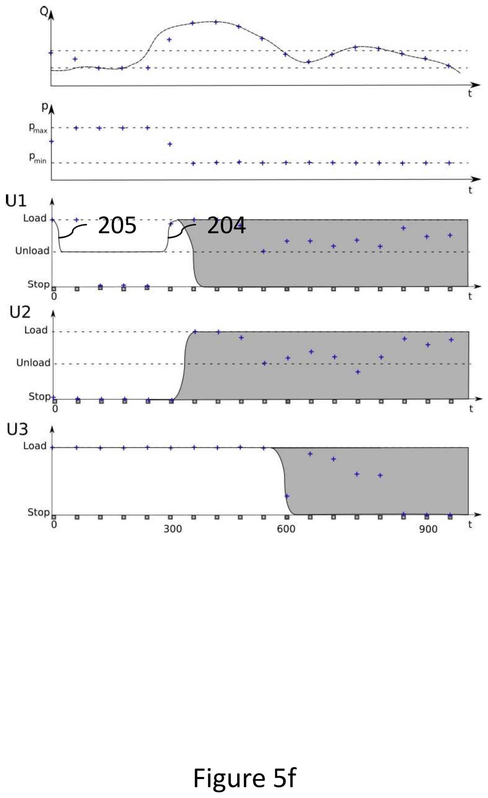

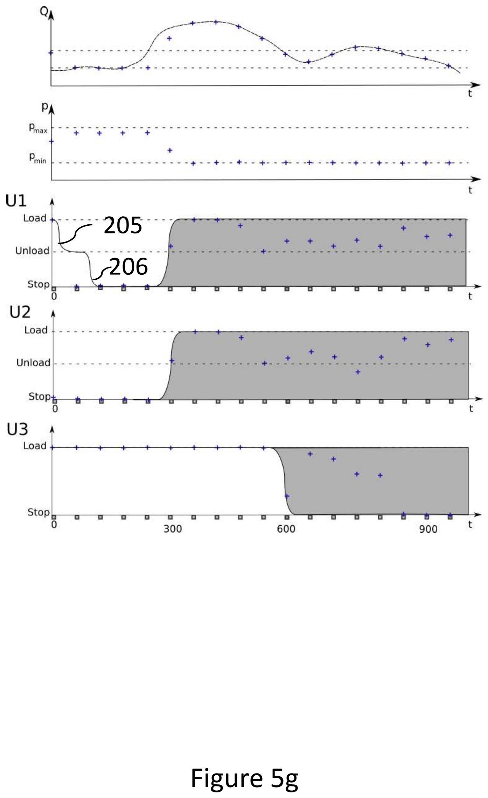

In the branch of Figure 5d, machine 200 is initially constrained in the loaded state whereas in the branch of Figure 5e, a state transition 205 to the unloaded state is imposed on machine 200. After solution, both branches are shown to be partially solved and feasible and are maintained in the queue. Since the cost of the objective function is lower (not shown in the figures) for the sequence of operation of Figure 5e than for the sequence of operation of Figure 5d, the branch of Figure 5d is discarded and the branching algorithm decides to branch from the sequence of Figure 5e. Since machine 200 is still the least solved of the three machines, the branching algorithm decides to branch by imposing an additional state transition on machine 200, leading to the creation of two new branches that are added to the queue and are represented in Figures 5f and 5g. After creation of the branches, represented in Figures 5f and 5g, the parent, represented in Figure 5e, is discarded.

In the branch of Figure 5f, this additional state transition is a transition 204 from the unloaded to the loaded state, whereas in the branch of Figure 5g, this additional state transition is a transition 206 from the unloaded to the stopped state. Both branches are feasible. The cost of the objective function is lower (not shown in the figures) for the sequence of operation of Figure 5g than for the sequence of operation of Figure 5f. Hence, the branch of Figure 5f is discarded whereas the branch of Figure 5g is added to the queue.

At this moment in time, it may happen that the maximum calculation time for a single iteration of the method has elapsed. None of the branches have been fully solved. The method will thus select the item with the lowest objective cost from the queue, which is the sequence of operation of Figure 5g. This sequence will be applied to the compressors.

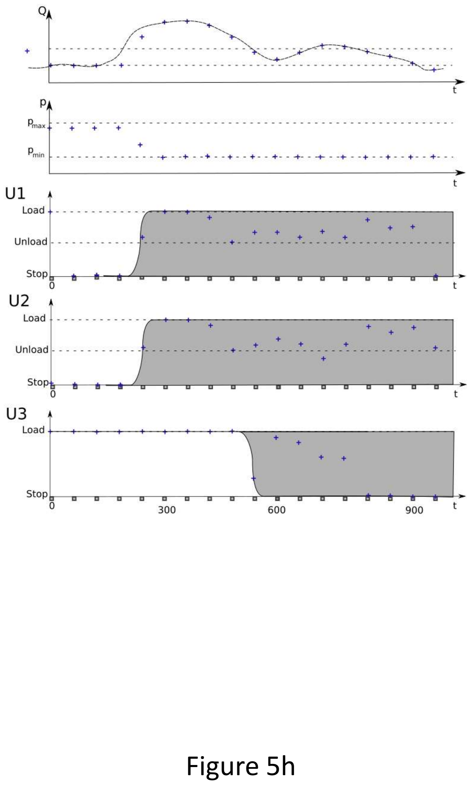

Subsequently, at the start of the next iteration, all items in the queue need to be shifted in time such that the beginning of their time horizon coincides with the beginning of the new time horizon of the prediction data. Figure 5h shows the sequence of Figure 5g that has been shifted in time. Now, machines 200 and 200' are initially in the stopped state and machine 200" is initially in the loaded state. If any other sequences are in the queue at this moment, these also shifted in time. However, if these other sequences have become infeasible because their new initial states do not match with the new initial states of the compressors, they are discarded as well. The sequence of Figure 5h, which is currently applied to the compressors is the only remaining item in the queue. The branch & bound algorithm will create branches from this item and will attempt to solve them.

Reference signs

| | |
|---|---|
| 100 | compressed air system |
| 101 | compressor |
| 102 | controller |
| 103 | vessel |
| 104 | valve |
| 105 | client network |
| 106 | master controller |
| 110 | characterizing data |
| 120 | prediction data |
| 121 | predicted airflow demand |
| 122 | calculated airflow |
| 123 | predicted minimum pressure demand |
| 124 | predicted maximum pressure demand |
| 125 | calculated pressure |
| 126 | prediction period |
| 127 | period of time |
| 130 | configuration data |
| 131 | constrained state |
| 132 | unconstrained state |
| 200 | state machine |
| 201 | loaded state |
| 202 | unloaded state |
| 203 | stopped state |
| 204 | transition from the unloaded to the loaded state |
| 205 | transition from the loaded to the loaded state |
| 206 | transition from the unloaded to the stopped state |
| 207 | transition from the unloaded to the loaded state |
| 208 | transition from the loaded to the stopped state |
| 209 | transition from the stopped to the loaded state |
| 210 | minimum time spent in a state |
| 220 | switching time |
| 221 | next switching time |
| 222 | constrained zone |
| 223 | unconstrained zone |

224    adjacent switch
225    free-floating switch
300    method initialization step
301    data collection step
302    queue updating step
303    time checking step
304    queue checking step
305    branch & bound algorithm
306    container checking step
307    solution selection from queue step
308    solution selection from container step
309    configuration of compressors step
400    item selection algorithm
401    branching algorithm
402    branch checking step
403    MINLP solver step
404    feasibility checking step
405    branch discarding step
406    solution checking step
407    addition to container step
408    addition to queue step

**Claims**

1. A computer implemented method for controlling a finite set of components which are fluidly connected to a common compressed air distribution system, the method comprising iteratively repeating the steps of:

   - receiving prediction data representing predicted future pressure and/or airflow demand for said compressed air distribution system, said prediction data covering a prediction period;
   - receiving characterising data for each component of said set of components, said characterising data comprising at least air flow data, air pressure data and energy consumption data;
   - determining one or more sets of continuously differentiable functions, wherein each of said sets of functions describes the pressure and/or airflow of said compressed air distribution system, wherein each of said sets of functions represents a unique sequence of operation of the components in said set of components that meet said predicted future pressure and/or airflow data for at least an initial portion of said prediction period;
   - selecting an optimal set of functions from said one or more sets of continuously differentiable functions; wherein the unique sequence of operation represented by said optimal set meets said predicted future pressure and/or airflow data for at least a second portion of said prediction period;
   - deriving configuration data for said set of components from said optimal set of functions;
   - configuring each component of said set of components based on said configuration data.

2. A method according to claim 1, wherein each component of said set is represented by a state machine.

3. A method according to claim 2, wherein determining one or more sets of continuously differentiable functions comprises generating state space data representing possible sequences of operation of said set of components.

4. A method according to claim 3, wherein said state space data is generated based on allowable state transitions from a previous state of one or more components of said set of components to a subsequent state of the one or more components of said set.

5. A method according to claim 3 or 4, further comprising a step of pruning said state space data based on at least one boundary condition or a value of an objective function.

6. A method according to any of the preceding claims, wherein each of said one or more sets of functions comprises an objective function describing energy usage of said compressed air distribution system, wherein said selecting of an optimal set of functions comprises searching at least a local minimum of said objective function.

7. A method according to claim 6, wherein said local minimum is searched using a branch & bound algorithm.

8. A method according to claim 6 or 7, wherein said local minimum of said objective function is searched by determining the time instants at which the components of the set of components undergo the state transitions of the sequence of operation represented by said optimal set of functions.

9. A method according to any of the preceding claims, wherein said characteristic data further comprises minimal start-up energy data and/or minimal activity period after start-up data and/or average maintenance time for at least one component of said set of components.

10. A method according to any of the preceding claims, wherein iteratively repeating comprises repeating at discrete, regular time intervals.

11. A method according to any of the preceding claims, wherein said prediction period is time dependent.

12. A method according to any of the preceding claim, further comprising determining said initial portion of said prediction period based on at least said maximal processing power of a data processing means performing said method.

13. A data processing system comprising means for carrying out the method according to one of the preceding claims.

14. A computer program comprising instructions which, when the program is executed by a computer, cause the computer to carry out the method according to one of the claims 1 to 12.

15. A compressed air or gas system configured to be controlled according to the method according to one of the claims 1 to 12.

Figure 1

Figure 2a

Figure 2b

Figure 3a

Figure 3b

Figure 4a

305

Get item from queue

400

Branch item

401

All branches solved?

402

Y

N

Solve branch

403

Branch feasible & lower cost than best found?

404

Discard branch

405

N

Branch fully solved?

406

Add branch to container

407

Y

N

Add branch to queue

408

Figure 4b

Figure 5a

Figure 5b

Figure 5c

Figure 5d

Figure 5e

Figure 5f

Figure 5g

Figure 5h

Europäisches
Patentamt

European
Patent Office

Office européen
des brevets

# EUROPEAN SEARCH REPORT

**Application Number**

EP 25 21 6504

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2016/245273 A1 (WAGNER FLORIAN [DE]) 25 August 2016 (2016-08-25) <br> * figure 1 * <br> * paragraph [0001] - paragraph [0011] * <br> * paragraph [0144] - paragraph [0200] * <br> * paragraph [0219] - paragraph [0250] * <br> ----- | 1-15 | INV. <br> F04B41/06 <br> F04B49/02 <br> F04B49/06 <br> F04B49/08 <br> F04B49/10 <br> F04C23/00 <br> F04D27/02 |
| A,D | WO 2008/009072 A1 (ATLAS COPCO AIRPOWER NV [BE] ET AL.) 24 January 2008 (2008-01-24) <br> * figure 1 * <br> * page 3, line 19 - page 8, line 14 * <br> ----- | 1-15 | |
| A | US 2020/162559 A1 (SUSTAETA ANGEL [US] ET AL) 21 May 2020 (2020-05-21) <br> * figure 1 * <br> * paragraph [0071] - paragraph [0102] * <br> ----- | 1-15 | |

**TECHNICAL FIELDS SEARCHED (IPC)**

F04B
F04C
F04D

The present search report has been drawn up for all claims

| Place of search | Date of completion of the search | Examiner |
|---|---|---|
| Munich | 21 November 2025 | Ricci, Saverio |

EPO FORM 1503 03.82 (P04C01)

## ANNEX TO THE EUROPEAN SEARCH REPORT
## ON EUROPEAN PATENT APPLICATION NO.

EP 25 21 6504

This annex lists the patent family members relating to the patent documents cited in the above-mentioned European search report.
The members are as contained in the European Patent Office EDP file on
The European Patent Office is in no way liable for these particulars which are merely given for the purpose of information.

21-11-2025

| Patent document cited in search report | Publication date | Patent family member(s) | Publication date |
|---|---|---|---|
| US 2016245273 A1 | 25-08-2016 | DE 102013111218 A1 | 16-04-2015 |
| | | EP 3055570 A1 | 17-08-2016 |
| | | EP 3640476 A1 | 22-04-2020 |
| | | EP 4224016 A1 | 09-08-2023 |
| | | ES 2770524 T3 | 01-07-2020 |
| | | ES 2948786 T3 | 19-09-2023 |
| | | US 2016245273 A1 | 25-08-2016 |
| | | US 2025020117 A1 | 16-01-2025 |
| | | WO 2015052055 A1 | 16-04-2015 |
| WO 2008009072 A1 | 24-01-2008 | BE 1017230 A3 | 06-05-2008 |
| | | BR PI0714368 A2 | 19-02-2013 |
| | | EP 2041435 A1 | 01-04-2009 |
| | | ES 2705167 T3 | 22-03-2019 |
| | | JP 5344700 B2 | 20-11-2013 |
| | | JP 2009543964 A | 10-12-2009 |
| | | KR 20090029792 A | 23-03-2009 |
| | | RU 2009105495 A | 27-08-2010 |
| | | US 2009320929 A1 | 31-12-2009 |
| | | WO 2008009072 A1 | 24-01-2008 |
| US 2020162559 A1 | 21-05-2020 | US 2009204245 A1 | 13-08-2009 |
| | | US 2017359418 A1 | 14-12-2017 |
| | | US 2020162559 A1 | 21-05-2020 |

EPO FORM P0459

For more details about this annex : see Official Journal of the European Patent Office, No. 12/82

# EP 4 675 103 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008009073 A
- WO 2008009072 A